# EUROPÄISCHE PATENTANMELDUNG

(11) **EP 1 719 573 A1**
(43) Veröffentlichungstag der Anmeldung: **08.11.2006**
(21) Anmeldenummer: 06006638.8
(22) Anmeldetag: 30.03.2006
(51) Int. Cl.: B23Q 1/01, B23Q 11/00, B24B 13/04

(54) **Drehmaschine mit einem einstückigen Gestell aus Polymerbeton**

(30) Priorität: 06.05.2005 DE 102005021638
(71) Anmelder: Satisloh GmbH, 35578 Wetzlar (DE)
(72) Erfinder: Schäfer, Holger, 35789 Weilmünster (DE)
(74) Vertreter: Oppermann, Mark

(57) **Zusammenfassung**

Eine Drehmaschine zur Bearbeitung von insbesondere Brillengläsern mit einer Fast-Tool-Anordnung (13) und einer Werkstückspindelanordnung (14) besitzt ein monolithisch aus Polymerbeton gegossenes Maschinengestell (10), an und in welchem alle Funktionsflächen, Funktionsräume und sonstige Aussparungen bei der Gießformung maßgenau gebildet sind. Das Maschinenoberteil (12) des Maschinengestells deckt nach Art einer Abdeckhaube die Fast-Tool-Anordnung und Werkstückspindelanordnung und damit das Maschinenbett (11) ab. Das Maschinengestell ist von kompakten Abmessungen, hat ein sehr steifes schwingungsdämpfendes Maschinenbett und besitzt im Vergleich zu den schnell bewegten Elementen der Fast-Tool-Anordnung eine sehr große Masse mit hochliegendem Schwerpunkt, welche die Übertragung störender Schwingungen aus der Fast-Tool-Bewegung auf das Maschinenbett und damit auf die Werkstückspindelanordnung verhindert. Die so ausgebildete Drehmaschine ist preisgünstig herzustellen und ermöglicht die Erzeugung von beliebigen Brillenglasoptikflächen von höchster Formtreue und Flächengüte. Die erzielbare Optikflächenqualität ermöglicht direktes Polieren, wodurch erhebliche Einsparungen im Folgeprozeß erreicht werden. Bei entsprechender Ausrüstung mit einer Frässpindelanordnung können Brillenglas-Randbearbeitungen vorgenommen werden.

## Beschreibung

### TECHNISCHES GEBIET

Die Erfindung bezieht sich auf eine Drehmaschine zur Bearbeitung von optischen Werkstücken, insbesondere von Brillengläsern, entsprechend dem Oberbegriff des Anspruchs 1.

### STAND DER TECHNIK

Bei der hochgenauen Drehbearbeitung nichtrotationssymmetrischer Brillengläser werden sogenannte Fast-Tools eingesetzt, die als hochdynamisch bewegbare Drehmeißelhalterungen mit eigenem Antrieb zur linear reziprozierenden oder auch zur rotativen Drehmeißelführung ausgebildet sind. Bei der Bearbeitung derartiger Brillengläser treten Hubbewegungen des Drehmeißels bis zu etwa 30 mm Weglänge und extrem hohe Beschleunigungen bis zu etwa 20 g auf. Durch diese hohen Beschleunigungen in wechselnder Bewegungsrichtung werden Schwingungen generiert, die als Vibrationen auf das Maschinengestell übertragen werden. Diese Vibrationen sind sehr unerwünscht, weil dadurch Formfehler auf den bearbeiteten optischen Werkstückflächen entstehen.

Es ist bereits vorgeschlagen worden, die bewegte Fast-Tool-Masse durch Massenkompensation mittels einer entsprechenden im Gegentakt schwingenden Ausgleichsmasse zu kompensieren, so daß keine störenden Schwingungen auf das Maschinenbett übertragen werden können. Beispielsweise werden mehrere Fast-Tool-Anordnungen (US 2003/0183050 A1) verwendet, die in Gegenrichtung zu dem an der Drehbearbeitung aktiv beteiligten Werkzeug schwingen. Bei einer weiteren bekannten Bearbeitungsmaschine (EP 0 854 769 B1) ist vorgesehen, daß die durch die Beschleunigung des Linearantriebs bewirkte Reaktionskraft dynamisch ausgeglichen wird durch einen zweiten Linearantrieb, der kolinear zum ersten Linearantrieb angeordnet ist und dessen Gehäuse bzw. Stator mechanisch mit dem Gehäuse bzw. Stator des ersten Linearantriebs über das Maschinenbett gekoppelt ist und der in entgegengesetzter Richtung zum ersten Linearantrieb angesteuert wird. Nachteilig bei der bekannten Art der Massenkompensation ist der hohe mechanische, elektrische, regelungstechnische und steuerungstechnische Aufwand zur Erzeugung synchroner Massenausgleichsbewegungen.

### DARSTELLUNG DER ERFINDUNG

Der Erfindung liegt die Aufgabe zugrunde, eine Drehmaschine der im Oberbegriff des Anspruchs 1 angegebenen Ausbildung bereitzustellen, bei der auf ebenso einfache wie kostengünstige Weise die Übertragbarkeit von durch das Fast-Tool erzeugter störender Vibrationen auf das Maschinenbett vermieden ist.

Die gestellte Aufgabe wird erfindungsgemäß durch die im Anspruch 1 angegebenen Merkmale gelöst. Vorteilhafte oder zweckmäßige Weiterbildungen der Erfindung gehen aus den Unteransprüchen hervor, die nachfolgend ebenfalls näher erläutert sind.

Nach dem Grundgedanken der Erfindung wird ein schweres, steifes und gute Dämpfungseigenschaften aufweisendes Maschinengestell aus Polymerbeton vorgesehen, das ein einteilig angeformtes Maschinenoberteil aus Polymerbeton besitzt, in welchem Maschinenelemente, insbesondere die Fast-Tool-Anordnung und die Werkstückspindelanordnung, die an dem Maschinenbett anzubringen sind, leicht montierbar und justierbar sind.

Während nach dem Stande der Technik das Oberteil einer solchen Drehmaschine nur aus einer leichten aufsetzbaren Haube aus Blech oder Faserverbundwerkstoffen besteht, ist das Maschinenoberteil erfindungsgemäß mit dickwandigen schweren Wandteilen aus Polymerbeton geformt, die zusammen mit dem Maschinenbett ein einteiliges Maschinengestell aus Polymerbeton bilden. Im Verfolg des Erfindungsgedankens wird also ein möglichst hohes Masseverhältnis zwischen der Masse der bewegten Teile der Fast-Tool-Anordnung und der Masse des Maschinengestells angestrebt. Beispielsweise können die bewegten Teile der Fast-Tool-Anordnung eine Masse von 1,2 kg haben, während der stationäre Teil der Maschine, d. h. das Maschinengestell aus Polymerbeton und die übrigen Komponenten der Maschine eine Masse von 1200 kg aufweisen können. Das Massenverhältnis beträgt hierbei 1 : 1000. Es hat sich gezeigt, daß durch die erfindungsgemäße monolithische Ausbildung des Maschinengestells aus Polymerbeton keine von der Fast-Tool-Anordnung generierten störenden Vibrationen auf das Maschinengestell und damit auf die Werkstückspindel übertragen werden, so daß keine Formfehler auf der bearbeiteten optischen Werkstückfläche auftreten können.

Die einteilige Herstellung des Maschinengestells aus Polymerbeton eröffnet die vorteilhafte Möglichkeit alle Funktionsflächen, Funktionsräume und sonstige Aussparungen schon bei der Herstellung maßgenau einzuformen. So können beispielsweise wie im Anspruch 2 angegeben die Funktionsflächen die Montageflächen für die Fast-Tool-Anordnung, die Werkstückspindel mit Querschlitten-Anordnung und ggf. eine zusätzliche Frässpindelanordnung sowie die Anlageflächen für ein Bedienpult und Ablageflächen einschließen, während die Funktionsräume beispielsweise einen Arbeitsraum, einen Schrankraum für die Pneumatikelemente der Maschine und einen Schrankraum für die elektrischen/elektronischen Elemente der Maschine einschließen.

Vorzugsweise ist die Drehmaschine entsprechend Anspruch 3 so ausgebildet, daß der Massenschwerpunkt der Drehmaschine etwa in der Bewegungsebene der Fast-Tool-Anordnung liegt, wodurch keine von der Fast-Tool-Bewegung verursachten Kippmomente um den Schwerpunkt entstehen können, was einen ruhigen Bearbeitungsablauf sicherstellt.

Zur Schaffung eines glattflächigen Planums für die Montage der Fast-Tool-Anordnung, der Werkstückspindelanordnung mit Querschlittenanordnung und ggf. der zusätzlichen Frässpindelanordnung können die zugehörigen Montageflächen wie im Anspruch 4 angegeben mit einem Epoxidharz ausgegossen sein.

### KURZE BESCHREIBUNG DER ZEICHNUNGEN

Weitere Einzelheiten der Erfindung werden nachfolgend anhand der ein Ausführungsbeispiel darstellenden Zeichnungen näher erläutert. Darin zeigt:

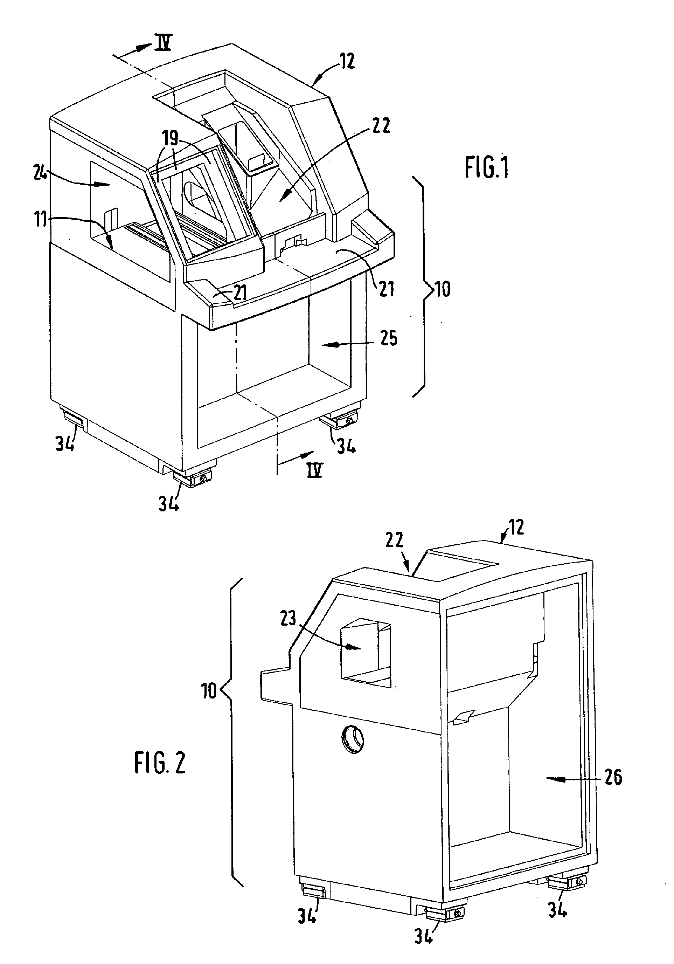

- Fig. 1: Eine perspektivische Vorderansicht des einteilig geformten Maschinengestells aus Polymerbeton, im wesentlichen noch vor der Montage der Funktionselemente der Drehmaschine,
- Fig. 2: eine perspektivische Rückansicht des in Fig. 1 dargestellten Maschinengestells,
- Fig. 3: eine perspektivische Horizontalschnittansicht, bei welcher das Maschinenoberteil der fertig montierten Maschine etwa in der Höhe der Fast-Tool-Anordnung und der Werkstückspindelanordnung geschnitten ist,
- Fig. 4: eine perspektivische Vertikalschnittansicht entsprechend der Schnittlinie IV-IV in Fig. 1,
- Fig. 5: eine perspektivische Vorderansicht ähnlich Fig. 1, jedoch bei fertig montierter Maschine, und
- Fig. 6: eine perspektivische Rückansicht der in Fig. 5 dargestellten Maschine.

### DETAILLIERTE BESCHREIBUNG DES AUSFÜHRUNGSBEISPIELS

Das in den Zeichnungen dargestellte einteilig geformte Maschinengestell 10 ist aus einem für den Maschinenbau geeigneten Polymerbeton gegossen. Polymerbeton ist ein Verbundwerkstoff, bestehend aus einem mineralischen Füllstoffgemisch und einem Bindemittel auf Reaktionsharzbasis und wird aufgrund seiner Zusammensetzung auch als Mineralguß bezeichnet. Als Reaktionsharz sind Epoxidharze gebräuchlich, weil sie die Hauptanforderungen an den Mineralguß, nämlich hoher E-Modul, gutes Dämpfungsverhalten, niedrige innere Spannungen, minimaler Schwund für hohe Abformgenauigkeit und einen geringen thermischen Ausdehnungskoeffizienten, am besten erfüllen.

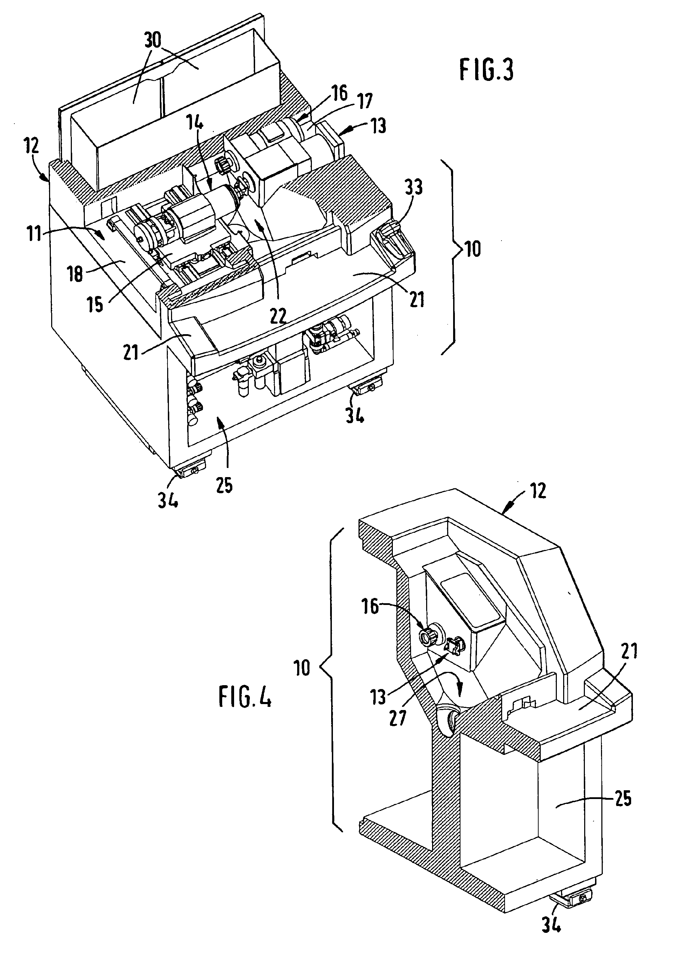

Das Maschinengestell 10 umfasst ein Maschinenbett 11 und ein einteilig damit gegossenes Maschinenoberteil 12. Auf dem Maschinenbett 11 sind, wie am besten aus Fig. 3 hervorgeht, die Fast-Tool-Anordnung 13 und die Werkstückspindelanordnung 14 angeordnet und durch Anschrauben befestigt, im Fall der Werkstückspindelanordnung 14 über eine Querschlittenanordnung 15. Im gezeigten Beispiel befindet sich neben der Fast-Tool-Anordnung 13 noch eine Frässpindelanordnung 16, die der Randbearbeitung der Brillengläser dient.

Das Maschinenbett 11 ist aufgrund dickwandiger Gestaltung und der spezifischen Eigenschaften des Polymerbetons sehr steif und schwingungsresistent. Die angestrebte Verlagerung des Massenschwerpunkts der Drehmaschine etwa in die Bewegungsebene der Fast-Tool-Anordnung 13 läßt sich unter Berücksichtigung der Masse der mit dem Maschinengestell 10 fest verbundenen Funktionsteile, hauptsächlich der Massen der Fast-Tool-Anordnung 13, der Werkstückspindelanordnung 14 und der Frässpindelanordnung 16, durch entsprechende Gestaltung des Maschinenbetts 11 und des Maschinenoberteils 12, d. h. durch entsprechende Massenverteilung zwischen Maschinenbett 11 und Maschinenoberteil 12, konstruktiv leicht erzielen.

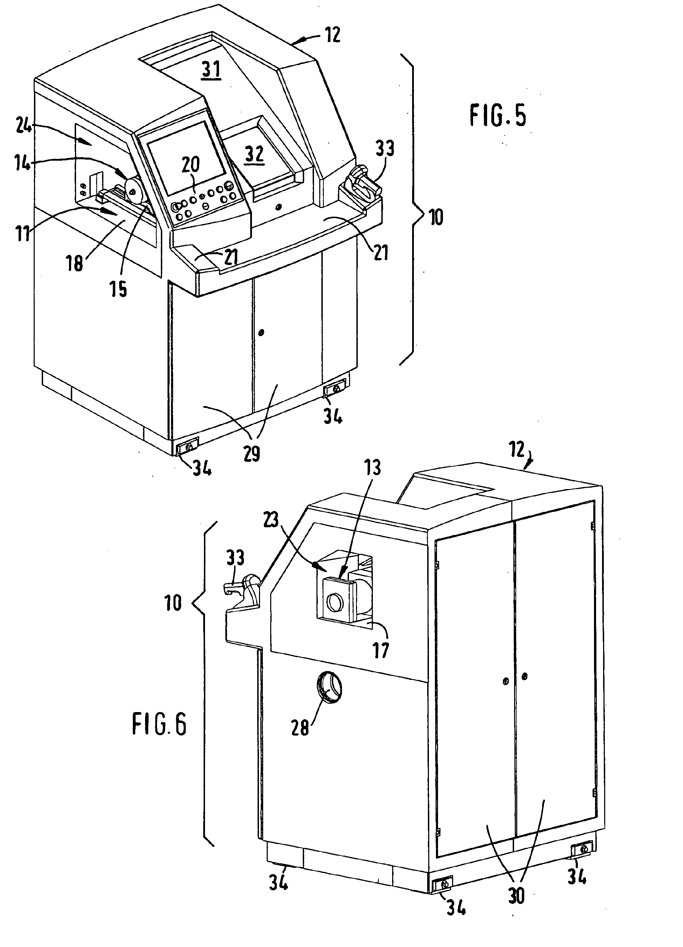

Alle Funktionsflächen und -räume und alle sonstigen Aussparungen im Maschinengestell 10 können durch entsprechende Gestaltung der Gießform beim Gießen des Polymerbetons erzeugt werden. Zu den Funktionsflächen gehören die Montageflächen 17 und 18 am Maschinenbett 11 für die Fast-Tool-Anordnung 13 und die Frässpindelanordnung 16 bzw. für die Werkstückspindelanordnung 14 mit dazugehöriger Querschlittenanordnung 15, die Anlageflächen 19 für ein Bedienpult 20 (Fig. 5) und Ablageflächen 21.

Zu den Funktionsräumen gehört der eigentliche Arbeitsraum 22 der Drehmaschine, in welchem die Bearbeitung des von der CNCgesteuerten Werkstückspindelanordnung 14 angetriebenen Brillenglasrohlings durch das Fast-Tool und ggf. gleichzeitig durch die Randbearbeitungsfräse der Frässpindelanordnung 16 erfolgt. Auch Aussparungen 23 und 24 im Maschinenoberteil 12, die mit dem Arbeitsraum 22 in Verbindung stehen und der Aufnahme der Fast-Tool-Anordnung 13 mit der Frässpindelanordnung 16 bzw. der Werkstückspindelanordnung 14 dienen, gehören zu den Funktionsräumen des Maschinengestells 10. Schließlich sind auch ein Schrankraum 25 für Pneumatikelemente, der sich im Maschinenbett 11 befindet, und ein Schrankraum 26 für elektrische/ elektronische Elemente, der sich vom Maschinenbett 11 bis in das Maschinenoberteil 12 erstreckt, zu den Funktionsräumen zu rechnen.

An den Arbeitsraum 22 schließt sich nach unten als weiterer Funktionsraum ein Auffangraum 27 für das an den Bearbeitungsort zugeführte Kühlmittel an, wie am besten aus Fig. 4 hervorgeht. Das in den Auffangraum 27 gelangende Kühlmittel wird durch eine Öffnung 28 (Fig. 6) nach außen abgeführt.

Wie aus den Fig. 5 und 6 zu entnehmen ist, sind bei der fertiggestellten Drehmaschine die Schrankräume 25 und 26 durch Türen 29 bzw. 30 verschließbar. Der Arbeitsraum 22 ist nach oben und vorn durch einen Spritzschutzdeckel 31 abdeckbar, in welchem sich eine automatisch öffnende Klappe für den Werkstückwechsel mit einem Sichtfenster 32 befindet, wie aus Fig. 5 hervorgeht.

In den Fig. 5 und 6 ist auch ein Barcode-Reader 33 am Maschinengestell 10 dargestellt, der zur Erfassung der Daten der Brillenglasrohlinge dient. Wie aus allen Zeichnungen ersichtlich ist sind an den vier unteren Ecken des Maschinengestells 10 höheneinstellbare Aufstellfüße 34 vorgesehen.

Vorgeschlagen wird eine Drehmaschine zur Bearbeitung von optischen Werkstücken, insbesondere von Brillengläsern, mit einer Fast-Tool-Anordnung und einer Werkstückspindelanordnung, wobei die Drehmaschine ein monolithisch aus Polymerbeton gegossenes Maschinengestell besitzt, an und in welchem alle Funktionsflächen, Funktionsräume und sonstigen Aussparungen bei der Gießformung maßgenau gebildet sind. Das Maschinenoberteil des einteilig gegossenen Maschinengestells deckt zugleich nach Art einer Abdeckhaube die Fast-Tool-Anordnung und die Werkstückspindelanordnung und damit das Maschinenbett ab. Das monolithische Maschinengestell aus Polymerbeton ist von kompakten Abmessungen, hat ein sehr steifes schwingungsdämpfendes Maschinenbett und besitzt im Vergleich zu den schnell bewegten Elementen der Fast-Tool-Anordnung eine sehr große Masse mit hochliegendem Schwerpunkt, welche die Übertragung störender Schwingungen aus der Fast-Tool-Bewegung auf das Maschinenbett und damit auf die Werkstückspindelanordnung verhindert. Die so ausgebildete Drehmaschine ist preisgünstig herzustellen und ermöglicht die Erzeugung von beliebigen Brillenglasoptikflächen von höchster Formtreue und Flächengüte. Die erzielbare Optikflächenqualität ermöglicht direktes Polieren mittels flexibler oder anpassungsfähiger Polierwerkzeuge, wodurch erhebliche Einsparungen im Folgeprozeß ermöglicht werden. Bei entsprechender Ausrüstung mit einer Frässpindelanordnung können Randbearbeitungen der Brillengläser vorgenommen werden.

### BEZUGSZAHLENLISTE

- 10: Maschinengestell
- 11: Maschinenbett
- 12: Maschinenoberteil
- 13: Fast-Tool-Anordnung
- 14: Werkstückspindelanordnung
- 15: Querschlittenanordnung
- 16: Frässpindelanordnung
- 17: Montagefläche
- 18: Montagefläche
- 19: Anlagefläche
- 20: Bedienpult
- 21: Ablageflächen
- 22: Arbeitsraum
- 23: Aussparung
- 24: Aussparung
- 25: Schrankraum
- 26: Schrankraum
- 27: Auffangraum
- 28: Öffnung
- 29: Türen
- 30: Türen
- 31: Spritzschutzdeckel
- 32: Sichtfenster
- 33: Barcode-Reader
- 34: Aufstellfüße

## Patentansprüche

1. Drehmaschine zur Bearbeitung von optischen Werkstücken, insbesondere von Brillengläsern, mit einer Fast-Tool-Anordnung (13) und einer Werkstückspindelanordnung (14), die auf einem steifen Maschinenbett (11) gelagert und durch ein Maschinenoberteil (12) abgedeckt ist, **dadurch gekennzeichnet, daß** das Maschinenbett (11) und das Maschinenoberteil (12) unter Ausbildung aller Funktionsflächen und -räume als einteiliges Maschinengestell (10) aus Polymerbeton geformt sind.

2. Drehmaschine nach Anspruch 1, **dadurch gekennzeichnet, daß** die Funktionsflächen die Montageflächen (17, 18) für die Fast-Tool-Anordnung (13), die Werkstückspindelanordnung (14) mit Querschlittenanordnung (15) und ggf. eine zusätzliche Frässpindelanordnung (16), sowie die Anlageflächen (19) für ein Bedienpult (20) und Ablageflächen (21) einschließen, und daß die Funktionsräume einen Arbeitsraum (22), einen Schrankraum (25) für Pneumatikelemente der Maschine und einen Schrankraum (26) für elektrische/elektronische Elemente der Maschine einschließen.

3. Drehmaschine nach Anspruch 1 oder 2, **dadurch gekennzeichnet, daß** der Massenschwerpunkt der Maschine etwa in der Bewegungsebene der Fast-Tool-Anordnung (13) vorgesehen ist.

4. Drehmaschine nach einem der Ansprüche 1 bis 3, **dadurch gekennzeichnet, daß** die Montageflächen (17, 18) für die Fast-Tool-Anordnung (13), die Werkstückspindelanordnung (14) mit Querschlittenanordnung (15) und ggf. die zusätzliche Frässpindelanordnung (16) mit einem Epoxidharz glattflächig ausgegossen sind.
